# EUROPEAN PATENT SPECIFICATION

(11) **EP 2 601 846 B1**
(45) Date of publication and mention of the grant of the patent: **25.10.2017**
(21) Application number: 11814341.1
(22) Date of filing: 11.04.2011
(51) Int. Cl.: A23L 23/00, A23L 33/21, A23L 27/60, A23L 27/50, A23L 27/40, A23L 27/00, A23L 11/00, A21D 2/18, A21D 2/02, A23L 2/56, A23C 19/082

(54) **METHOD FOR IMPROVING SALTY TASTE OF FOOD AND BEVERAGE AND AGENT FOR IMPROVING SALTY TASTE OF FOOD AND BEVERAGE**
VERFAHREN ZUR VERBESSERUNG DES SALZIGEN GESCHMACKS VON SPEISEN UND GETRÄNKEN UND MITTEL ZUR VERBESSERUNG DES SALZIGEN GESCHMACKS VON SPEISEN UND GETRÄNKEN
PROCÉDÉ POUR AMÉLIORER LE GOÛT SALÉ D'ALIMENTS ET DE BOISSONS, ET AGENT DESTINÉ À AMÉLIORER LE GOÛT SALÉ D'ALIMENTS ET DE BOISSONS

(30) Priority: 06.08.2010 JP 2010177653
(43) Date of publication of application: 12.06.2013
(73) Proprietor: Matsutani Chemical Industry Co., Ltd., Itami-shi, Hyogo 664-8508 (JP)
(72) Inventor: OKAZAKI Tomokazu, Itami-shi Hyogo 664-8508 (JP); GOURO Masaki, Itami-shi Hyogo 664-8508 (JP); HIROSAWA Shujiro, Itami-shi Hyogo 664-8508 (JP)
(74) Representative: Eisenführ Speiser
(86) International application number: PCT/JP2011/058989
(87) International publication number: WO 2012/017710

(56) References cited:
- EP-A1- 0 538 146
- JP-A- 2003 259 838
- JP-A- 2009 159 859
- JP-A- 2009 159 859
- JP-A- 2010 094 081
- US-A- 5 034 378
- US-A1- 2010 239 740

## Description

### [Technical Field]

The present invention relates to a method for enhancing a salty taste which is reduced when a sodium salt such as sodium chloride used for a food or beverage is reduced from the viewpoints of health and the like; and/or a method for improving (masking) a foreign taste (harsh taste) due to a salt substitute, for example, a potassium salt such as potassium chloride, added to supplement a salty taste reduced because of reduction in amount of a sodium salt such as sodium chloride;, and the use of an agent for enhancing a salty taste.

More specifically, the present invention relates to a method for enhancing a salty taste of a food or beverage, characterized in that the salty taste is enhanced by adding a water-soluble dietary fiber to the food or beverage containing a sodium salt such as sodium chloride; and/or a method for improving (masking) a foreign taste (harsh taste) of a food or beverage, the foreign taste being imparted by a potassium salt (a salt substitute) such as potassium chloride used to reduce salt; and also to the use of an agent for enhancing a salty taste comprising a water-soluble dietary fiber, wherein in each case the water-soluble dietary fiber is selected from the group consisting of indigestible dextrins.

### [Background Art]

Among sodium salts, sodium chloride is a basic seasoning to impart to a food or beverage a taste (particularly a salty taste) which makes the food or beverage particularly tasty. In addition, sodium chloride is essential in dietary life, for example, because sodium chloride plays a role in forming the network structure of wheat gluten to bring about the extensibility and elasticity in the production of bread and noodles. Moreover, the constituents, i.e., sodium and chlorine are necessary components for the human body. However, it was pointed out recently that excessive intake of sodium chloride, especially, sodium can be a causative factor of cardiovascular diseases such as hypertension, renal diseases, and cardiac diseases. Hence, products featuring reduced sodium have been under intensive development.

However, simple reduction in amount of sodium chloride blended in a food or beverage results in an unbalanced taste, which is very far from the taste the food has to have. Hence, consumers do not prefer such reduced-sodium foods and beverages. In this respect, some methods have been attempted to supplement the salty taste by using potassium salts such as potassium chloride, i.e., salt substitutes. However, the salt substitutes have a characteristic foreign taste (harsh taste) which sodium salts such as sodium chloride do not have, and it is difficult for consumers to be familiar with the foreign taste. Hence, various methods have been attempted to reduce the foreign taste (Patent Documents 1 and 2). In addition, some methods have been attempted to provide a reduced-sodium food or beverage by employing a method for enhancing a salty taste using no salt substitute such as potassium chloride (Patent Documents 3 to 18).

Various methods have been examined to reduce the harsh taste of salt substitutes such as potassium chloride. Examples of the methods include a method using a non-sugar component concentrate (a mixture of amino acids, organic acids, and salts thereof) obtained in sugar production (Patent Document 1); a method in which a gluconic acid salt and whey mineral are blended (Patent Document 2); and the like. However, all of these methods are still techniques each using several kinds of composite materials in combination, such as use of various amino acids, organic acids, salts thereof, and the like in combination.

Various methods have been examined to enhance a salty taste without using a salt substitute such as potassium chloride. Examples of such methods reported so far include those using amino acids, organic acids, and salts thereof (Patent Documents 3 to 5, and 11 to 14), those using sugars (Patent Documents 6 to 9), one using an inorganic salt (Patent Documents 10), those using protein hydrolysates (Patent Documents 15 to 17), one using a plant extract liquid (Patent Document 18), and the like.

However, the method for enhancing a salty taste by using a C3 to C8 saturated aliphatic monocarboxylic acid described in Patent Document 3 has drawbacks that the characteristic astringent taste and sour taste cannot be avoided, and that the food becomes oily when a high-molecular weight substance is used. Hence, it is difficult to apply the method to all foods. The methods for enhancing a salty taste by blending amino acids, organic acids, and salts thereof (Patent Documents 4, 5, 11 to 14) cannot be considered preferable, because of the characteristic flavors of the amino acids, organic acids, γ-aminobutyric acid, and the like, and also because of the complexity and costs associated with the blending of several kinds of them. The method for enhancing a salty taste using trehalose described in Patent Document 6 cannot be used for all foods and beverages because trehalose itself has a sweet taste, and is not preferably used for foods whose energy values are important because trehalose has an energy value of as high as 4 kcal/g. Meanwhile, Patent Document 8 discloses a method for enhancing a salty taste by using a sugar alcohol with a weak sweet taste. However, a sugar alcohol has characteristic astringent taste, and, when potassium chloride is used in combination, the harsh taste thereof is disadvantageously further emphasized. Regarding a method for enhancing a salty taste by using a di- or higher saccharide described in Patent Document 9, only di- to tetra saccharides are specifically disclosed. In addition, Patent Document 9 is silent about an effect of masking the foreign taste due to a salt substitute such as potassium chloride. Moreover, in the case of a method using a phosphoric acid salt (Patent Document 10), the phosphoric acid salt has a peculiar foreign taste, and in addition needs to be represented on the label as a food additive. Hence, food manufactures and consumers are reluctant to accept such a method. Moreover, the methods using a protein hydrolysate or a plant extract are less versatile, because the peculiar flavors of those substances impose limitations on the kinds of foods and beverages to which the methods are applicable.

### [Prior Art Documents]

### [Patent Document]

[Patent Document 1] Japanese Patent Application Publication No. Hei 06-014742
[Patent Document 2] Japanese Patent Application Publication No. 2008-289426
[Patent Document 3] Japanese Patent Application Publication No. Hei 5-184326
[Patent Document 4] Japanese Patent Application Publication No. 2004-275097
[Patent Document 5] Japanese Patent Application Publication No. 2002-345430
[Patent Document 6] Japanese Patent Application Publication No. Hei 10-66540
[Patent Document 7] Japanese Patent Application Publication No. 2009-082070
[Patent Document 8] Japanese Patent Application Publication No. 2008-099624
[Patent Document 9] Japanese Patent Application Publication No. 2006-314235
[Patent Document 10] Japanese Patent Application Publication No. 2010-075070
[Patent Document 11] Japanese Patent Application Publication No. 2010-011807
[Patent Document 12] Japanese Patent Application Publication No. 2008-054661
[Patent Document 13] WO 2008-120726
[Patent Document 14] Japanese Patent Application Publication No. 2007-289182
[Patent Document 15] Japanese Patent Application Publication No. 2009-148216
[Patent Document 16] Japanese Patent Application Publication No. Hei 07-289198
[Patent Document 17] WO 01-039613
[Patent Document 18] Japanese Patent Application Publication No. 2006-296357

US 5,034,378 discloses a flavor enhancing composition for human food comprised of an edible salt selected from the group consisting of sodium chloride, potassium chloride, and monosodium glutamate, and granulated or powdered dietary fiber, said composition being in granular or powder form suitable for application to a human food prior to consumption.

JP 2009-159859 discloses a food boiled down in soy, free from raising a blood glucose level, and suitable for low salinity, which is produced by using as a sweetener, a natural sweetener which produces no glucose in the digestive system and lowers water activity, and using as a thickener, thickening polysaccharide which produces no glucose in the digestive system.

### [Summary of Invention]

### [Problems to Be Solved by the Invention]

An object of the present invention is to provide a method for enhancing a salty taste, which is superior to methods described so far. Moreover, another object of the present invention is to provide a method for enhancing a salty taste and/or a method for improving (masking) a harsh taste (masking), of a food or beverage containing a sodium salt such as sodium chloride and/or a potassium salt such as potassium chloride.

### [MEANS FOR SOLVING THE PROBLEMS]

The present inventors have conducted diligent studies to solve the above described problems. As a result, the present inventors have found the following facts. Specifically, unlike many salty taste enhancers and salty taste enhancing methods developed so far, a water-soluble dietary fiberselected from the group consisting of indigestible dextrins is capable of markedly enhancing a salty taste of a sodium salt such as sodium chloride, without imparting a foreign taste or a foreign odor. Moreover, the effect of enhancing a salty taste leads to a favorable total balance of tastes including an umami taste and a Kokumi taste (richness or body), and the effect is fully exhibited especially in the cases of reduced-sodium foods and beverages. Moreover, in the cases of reduced-sodium foods and beverages whose salty tastes are supplemented by using a salt substitute such as potassium chloride, the use of a water-soluble dietary fiber selected from the group consisting of indigestible dextrins achieves not only the effect of enhancing a salty taste, but also a second effect of masking the peculiar foreign taste (harsh taste) of a potassium salt such as potassium chloride. These findings lead to the completion of the present invention.

Specifically, the present invention provides the items which are defined in the claims.

### [EFFECTS OF THE INVENTION]

The present invention relates to a food or beverage using a dietary fiber as defined above. In particular, the present invention relates to a method for enhancing a salty taste and/or a method of improving (masking) a harsh taste of a reduced-sodium food or beverage containing a sodium salt such as sodium chloride. Conventionally, since such reduced-sodium foods and beverages have thin and unsatisfactory tastes, methods have often been employed in which various salty taste enhancers, or salt substitutes such as potassium chloride are used. Salt substitutes such as potassium chloride have a characteristic foreign taste (harsh taste). However, the present invention makes it possible to achieve well-balanced tastes including a salty taste and an umami taste even in a reduced-sodium food or beverage, and also to improve (mask) a harsh taste characteristic to potassium chloride. For this reason, it is made possible to reduce the risk of onset and exacerbation of diseases whose risk factor is thought to be sodium, and simultaneously to live a dietary life with fully satisfactory taste.

### [Modes for Carrying out the Invention]

In the present invention, a "salty taste" depends on a sodium salt, in particular, sodium chloride. The shape of the contained sodium chloride and the form of existence thereof may be any, as long as sodium chloride is contained. Accordingly, the contained sodium chloride may be, of course, a high-purity sodium chloride-containing product typified by common salt, refined salt, and table salt; or may be a slightly-low-purity sodium chloride-containing product such as bittern, seawater, or rock salt. Alternatively, the contained sodium chloride may be sodium chloride which is commonly used in a blend of seasoning and which is present in a complex seasoning such as an amino acid; an organic acid; an umami component or flavor component extracted from dried bonito, Kombu (edible kelp), Shiitake mushroom, or the like; and spices. An example of the sodium salt associated with the salty taste other than sodium chloride is trisodium citrate.

In the present invention, potassium chloride is a typical potassium salt used as a salt substitute alternative to sodium salts such as common salt, and another example of the potassium salt is potassium phosphate.

The term dietary fiber is a generic name for components contained in foods and not digested by human digestive enzymes. Dietary fibers can be roughly classified into water-soluble dietary fibers which are soluble in water, and water-insoluble dietary fibers which are insoluble in water. In the present invention, the term "water-soluble dietary fiber" refers to an indigestible saccharide which contains 50% by mass or more of dietary fibers as determined according to AOAC 2001. 03, which is soluble in water at 20°C at 20 g or more per 100 ml of water, and which has a viscosity of less than 20 mPa·s in a 5% by mass aqueous solution at 20°C wherein the water soluble dietary fiber is selected from the group consisting of indigestible dextrins.

Specific examples of the above-defined water-soluble dietary fiber include for example, commercially available products such as those manufactured by Matsutani Chemical Industry Co., Ltd. under the trade names of "Pinefiber" or "Fibersol-2".

In the present invention, the above-defined water-soluble dietary fiber preferably has a molecular weight of 1,000 to 5,000, and more preferably 1,500 to 2,500.

The water-soluble dietary fiber used in the present invention selected from the group consisting of indigestible dextrins is most effective.

The indigestible dextrin is obtained by heating starch with a trace amount of hydrochloric acid added thereto, followed by an enzymatic treatment. The indigestible dextrin is preferably a dextrin containing 85 to 95% by mass of indigestible components. Moreover, the indigestible dextrin also includes reduced products thereof produced by hydrogenation. The energy value of the indigestible dextrin is 1 kcal/g, according to the energy conversion factor for dietary fibers described in SyokuShinHatsu Nos. 0217001 and 0217002.

The molecular weight of the indigestible dextrin is generally in a range from 1,500 to 2,500.

As described above, general production of an indigestible dextrin involves heating with hydrochloric acid being added, followed by an enzymatic treatment. However, in the present invention, an indigestible dextrin prepared by any method may be used.

A method for enhancing a salty taste of a food or beverage of the present invention includes adding the water-soluble dietary fiber as defined above, which is an active ingredient, to a target food or beverage, thereby exhibiting a desired effect. The target food or beverage may be a food or beverage in any field, and contains at least a sodium salt typified by sodium chloride. The target food or beverage may further contain a potassium salt such as potassium chloride. To carry out the method for enhancing a salty taste of a food or beverage of the present invention, the water-soluble dietary fiber as defined above, which is an active ingredient, may be added in any step from the stage of the raw materials to the completion of the product in consideration of the composition and the intended use of the target food or beverage. As a method for the addition, one or more methods are selected appropriately from known methods such as mixing, kneading, dissolving, melting, dispersing, suspending, emulsifying, reverse micellization, permeation, spreading, applying, adhesion, spraying, covering (coating), injecting, immersing, supporting, and the like, for example. Alternatively, the above-defined water-soluble dietary fiber may be added by sprinkling the water-soluble dietary fiber on the product at the completion of production thereof or before eating it, or by other methods.

In the present invention, the necessary amount of water-soluble dietary fiber as defined above to be used to enhance the salty taste of the food or beverage is not particularly limited, as long as the desired effect can be obtained. The effect of enhancing a salty taste can be obtained effectively by using one or more selected from water-soluble dietary fibers as defined above in a total amount of approximately 0.5 w/w% or more, preferably approximately 1.0 w/w% or more, and further preferably approximately 1.0 w/w% to 10w/w%, with respect to the food or beverage. If the amount of the water-soluble dietary fiber as defined above added is less than 0.5 w/w% with respect to the food, beverage, or the like containing common salt, the effect of enhancing a salty taste is insufficient. Hence, the amount of the water-soluble dietary fiber as defined above added is preferably approximately 1.0 w/w% or more.

However, even when the amount of the above-defined water-soluble dietary fiber added is excessively large, the effect of enhancing a salty taste and the like is not further increased dramatically. Hence, from the economical viewpoint, it is sufficient that the upper limit of the above-defined water-soluble dietary fiber is set to 10.0 w/w% with respect to the food or beverage containing common salt.

Moreover, from the viewpoint of the effect of enhancing a salty taste, when the concentration of sodium chloride contained in the food, beverage, or the like is approximately 0.5 w/w% or more, more preferably 1 w/w% or more and 10 w/w% or less, and further preferably 1 w/w% or more and 7 w/w% or less, the effect of the present invention is particularly remarkable. If the concentration is 0.5 w/w% or less, a sufficient effect of enhancing a salty taste and the like is not obtained even by using the above-defined dietary fiber. On the other hand, it is impossible any more in a sensory test to perceive the effect of the present invention at a remarkable level, when the food, beverage, or the like has a concentration of sodium chloride exceeding approximately 10.0 w/w%, but does not undergo any special treatment. However, there is no problem because the concentration of salt contents in most foods and beverages generally taken by people is about 5% at the highest. In addition, even in a case of a food or beverage having a high concentration of salt contents or the like, if, for example, this is diluted before use, the effect of the present invention can be perceived at a remarkable level. The above-defined dietary fiber may be contained with reference to the above-described amount.

Moreover, when sodium chloride contained in the food or beverage is partially substituted by potassium chloride, it is possible not only to enhance the salty taste and the umami taste, but also to mask the foreign taste (harsh taste) characteristic to potassium chloride as follows. Specifically, the substitution ratio of potassium chloride for sodium chloride in the food or beverage is set to 50 w/w% or less in terms of anhydrous substance with respect to the total mass of sodium chloride, and 1 part by mass or more of the above-defined water-soluble dietary fiber is added per 1.5 parts by mass of sodium chloride and potassium chloride in total.

In producing a reduced-sodium food or beverage by the method of the present invention in which sodium salts such as sodium chloride are reduced, it is advantageous to cause a relatively small amount of sodium chloride to coexist with the above-defined dietary fiber and to use in combination a known salt substitute such as potassium chloride; a component having an effect of enhancing a salty taste other than those of the present invention, such as Koji hydrolysate, a monocarboxylic acid, a,a-trehalose, maltotetraose, or pullulan; a umami component such as monosodium L-glutamate, sodium inosinate, or sodium guanylate; a powder or an extract of Kombu or dried bonito containing such a umami component; or the like. In addition, a reduced-sodium food or beverage improved in palatability or nutritive value can be advantageously produced by using in combination one or more selected from appropriate additives such as flavors, coloring agents, acidulants, sweeteners, corrigents, spices, vitamins, and minerals, as needed.

A method of enhancing a salty taste of a food or beverage of the present invention can exhibit the desired effect, when the target food or beverage contains the above-defined water-soluble dietary fiber, which is an active ingredient. For this reason, in the cases of foods and beverages in any field, the foods and beverages only need to contain the above-defined water-soluble dietary fiber, which is an active ingredient, at the end. The above-defined water-soluble dietary fiber may be added at any timing during the process from the stage of raw materials to the completion of the products as described above. In addition, the above-defined water-soluble dietary fiber may be a form which is suitable, for example, for a case where a consumer sprinkles the above-defined water-soluble dietary fiber on the target food or beverage by himself/herself before eating.

In the present invention, even in a case where a salt substitute (potassium chloride or the like), or a umami component (an amino acid salt; a food such as Kombu or dried bonito, a sweetener, a spice, which contain a lot of an amino acid salt, or the like) is added to supplement a salty taste and an umami taste lost in the reduced-sodium food or beverage, the quality of taste thereof can be improved without any problem by appropriately adjusting the amount of the above-defined water-soluble dietary fiber added within a preferable range. In addition, since indigestible dextrins have only an extremely weak taste as described above, they can be used for any foods and beverages.

Specific examples of the "food or beverage" to which the present invention is applied include reduced-sodium seasonings (soybean paste, soy sauce, table salt, seasoned salt, mayonnaise, dressing, sauce for grilled meat, table vinegar, Sanbai-zu (a mixture of vinegar, soy sauce, and Mirin (a cooking sweet sake)), Sushi-zu (a mixture of vinegar and sugar), Dashinomoto (a soup and cooking stock), soup stocks, dips for Tempura, sauces for noodles, Worcestershire sauce, ketchup, curry roux, white roux, seafood extracts, vegetable extracts, meat extracts, and complex seasonings); reduced-sodium beverages (soft drinks such as vegetable juices, isotonic drinks, and carbonated beverages; soups such as soybean paste soup, Chinese soup, cream soup, and minestrone; dessert beverages such as adzuki-bean soup, milkshake, and gel beverages); reduced-sodium preserved foods (pickles; meat products such as ham; ground sea food products such as boiled fish pastes; dried fish products such as dried squid and dried fish seasoned with Mirin; instant noodles; instant soups; canned foods; bottled foods; various retort pouch foods; and the like); reduced-sodium baked products of wheat flour or the like (bread, cookie, cracker, rice confectionery, snack confectionery, and the like); and the like. The present invention is applicable to dietary supplements, pet foods, livestock animal foods, and the like. In addition, relating to the present invention, the "food or beverage" includes intermediate products and raw materials used to produce foods or beverages. Examples thereof include dough in the cases of baked products of wheat flour or the like such as bread and cookie; soup stocks in the cases of production of soups; powder or liquid soups in the cases of instant noodles; and the like.

The present invention makes it possible to improve not only the salty taste lost by reduction of sodium, but also the balance of tastes including also the Kokumi taste (richness) and the umami taste. Moreover, the present invention makes it possible to mask the foreign taste of a salt substitute such as potassium chloride. Hence, it is possible to provide reduced-sodium foods and beverages satisfactory to consumers, which would otherwise often result in dissatisfaction or a foreign taste because of a dull taste as a whole.

In this description, the term "reduced-sodium food or beverage" refers to a food or beverage whose amount of sodium originated from sodium chloride or the other sodium salt is intentionally reduced in comparison with the amount of sodium originated from sodium chloride or the other sodium salt generally contained in the food or beverage. For example, the "reduced-sodium food or beverage" includes foods and beverages which are reduced in salt from the viewpoint of health maintenance by salt intake restriction.

In addition, the use of a salty taste enhancing agent comprising the water-soluble dietary fiber as defined above can render the taste of foods and beverages satisfactory, when used for various foods and beverages, which would be otherwise weak in salty taste, and dull in taste, resulting in unsatisfactory taste. Here, examples of such foods and beverages include pickles, curry rice, Tempura (battered and deep fried foods), fermented foods, and the like.

In other words, as described earlier, the use of the salty taste enhancing agent according to the present invention can be used in any mode in which a food or beverage is seasoned during production process thereof, or the taste is adjusted by a consumer immediately before eating to suit his/her taste. For example, the salty taste enhancing agent may be used in a mode where the product is sprinkled at a food factory or a shop, for example, in the case of seasoning popcorn confectionery; in a mode where the food or beverage is seasoned by being mixed with a seasoning liquid in which the salty taste enhancing agent is contained in an oil, fat, or the like; or in a mode where a consumer seasons the food or beverage by sprinkling the salty taste enhancing agent thereonto immediately before eating.

The salty taste enhancing agent used according to the present invention may be a water-soluble dietary fiber itself as defined above, or may be one which contains mainly the above-defined water-soluble dietary fiber, preferably approximately 20% by mass or more, more preferably approximately 30% by mass or more of the above-defined water-soluble dietary fiber in terms of anhydrous substance, and which contains other additives. The aforementioned other additives, for example, may be one or more selected from a relatively small amount of sodium chloride; other known salty taste enhancers including salt substitutes such as potassium chloride, Koji hydrolysate, and monocarboxylic acids; mineral supplements such as calcium chloride, magnesium sulfate, iron citrate, whey mineral, and bittern; corrigents such as rutin, hesperidin, naringin, and derivatives thereof; flavor enhancers containing umami components such as L-monosodium glutamate, sodium inosinate, and sodium guanylate; spices such as capsicum pepper, peppers, and Japanese pepper; and the like. Those additives can be used in combination in appropriate amounts as needed.

Products produced by utilizing the present invention as described above are reduced in sodium content without altering the taste of the foods. As a result, these products can greatly contribute to health maintenance and promotion by preventing the induction of cardiovascular diseases such as hypertension, renal diseases, and cardiac diseases or improving such cardiovascular diseases.

Hereinbelow, the present invention will be described more specifically on the basis of experiments. In Experimental Examples, % represents % by mass.

### <Experimental Example 1>

### <Influence of Various Water-Soluble Dietary Fibers on Salty Taste of Sodium Chloride>

Investigation was made as to how change in kind of coexisting water-soluble dietary fiber influenced the salty taste of sodium chloride. As sodium chloride, reagent grade sodium chloride was used. The water-soluble dietary fibers used were an indigestible dextrin (commercially available from Matsutani Chemical Industry Co., Ltd. under the trade name of "Fibersol-2," having a molecular weight of approximately 1600); a branched maltodextrin (manufactured by ROQUETTE under the trade name of "Nutriose FB," having a molecular weight of approximately 1600); a polydextrose (manufactured by Danisco Cultor under the trade name of "Litesse II," having a molecular weight of approximately 2000); and an inulin (manufactured by Dai-Nippon Meiji Sugar Co., Ltd., under the trade name of Raftiline HP, having molecular weight approximately 1500). For comparison, a common dextrin was used (commercially available from Matsutani Chemical Industry Co., Ltd. under the trade name of "Pinedex #2", having a DE of 10 and a molecular weight of approximately 1700). Meanwhile, for reference, trehalose (manufactured by the Hayashibara Company under the trade name of "Treha") was used which is known to have an effect of enhancing a salty taste.

### <Experimental Method>

Each aqueous test solution was prepared by dissolving thereinto 1.5% of sodium chloride in terms of anhydrous substance and 1% of one of the above-described water-soluble dietary fibers in terms of anhydrous substance. Thus, sodium chloride and the water-soluble dietary fiber were caused to coexist in the aqueous test solution. As a control, a 1.5% sodium chloride aqueous solution containing no water-soluble dietary fiber was prepared. A panel test was conducted to evaluate how the salty taste of the aqueous test solution was changed in comparison with the control (the 1.5% sodium chloride aqueous solution containing no water-soluble dietary fiber). The panel test was conducted by 11 panelists including 6 men and 5 women, at a room temperature of 26°C. The influence on the salty taste was evaluated by using four grades, which corresponded to the situations where the salty taste was reduced, unchanged, slightly enhanced, or markedly enhanced in comparison with the control. For each of the water-soluble dietary fibers, and for each of the grades, the number of panelists who made the evaluation is shown in Table 1.

**(Table 1)**

| Product name | Influence on salty taste | | | | Remarks |
|---|---|---|---|---|---|
| | Reduced | Unchanged | Slightly enhanced | Markedly enhanced | |
| Fibersol-2 | 0 | 0 | 0 | 11 | |
| Pinedex #2 | 2 | 7 | 2 | 0 | |
| Nutriose FB | 0 | 3 | 7 | 1 | Foreign taste |
| Litesse II | 0 | 4 | 6 | 1 | Foreign taste |
| Raftiline HP | 0 | 3 | 6 | 2 | |
| Trehalose | 1 | 5 | 4 | 1 | Sweet taste |

As is apparent from the results shown in Table 1, regarding the salty taste of sodium chloride, a great effect of enhancing a salty taste was not observed in the presence of the common dextrin Pinedex #2 or trehalose, which is said to have an effect of enhancing a salty taste. However, an effect of enhancing a salty taste was observed in each of the cases of Fibersol-2, Nutriose FB, Litesse II, and Raftiline HP, which can be categorized into water-soluble dietary fibers, although the magnitude of the effect varied thereamong. Astonishingly, of these water-soluble dietary fibers, Fibersol-2, which is an indigestible dextrin, exhibited a particularly remarkable effect of enhancing a salty taste.

In addition, as described in Remarks, many panelists commented that they perceived a foreign taste such as an astringent taste or a harsh taste in the cases of Nutriose FB and Litesse II, and many panelists commented that they perceived a sweet taste in the case of trehalose.

### <Experimental Example 2>

### <Influence of Sodium Chloride Concentration and Indigestible Dextrin Concentration on Salty Taste Enhancement>

Of the dietary fibers used in Experimental Example 1, the indigestible dextrin proved to have the most potent effect of enhancing a salty taste. Accordingly, an investigation was made as to the relationship between the salty taste enhancement and the concentrations of sodium chloride and indigestible dextrin. By a method similar to that in Experimental Example 1, each aqueous test solution was prepared by dissolving therein sodium chloride and the indigestible dextrin. The concentration of each of sodium chloride and the indigestible dextrin in the aqueous test solution was set to 0.5 to 10% as shown in Table 2. As controls, aqueous solutions were prepared which contained no indigestible dextrin but contained 0.5 to 10% of sodium chloride. A panel test was conducted to compare the salty taste of each of the aqueous test solutions with that of the controls. The panel test was conducted by 11 panelists including six men and five women at a room temperature of 26°C. The evaluation was made by using four grades, which corresponded to the situations where the salty taste was reduced (-1), unchanged (0), slightly enhanced (1), or markedly enhanced (2) in comparison with the corresponding control. Table 2 shows the results obtained by multiplying, for each grade, the score by the number of panelists who made the evaluation (the numerical value of the evaluation result was -11 at the lowest, and 22 at the highest).

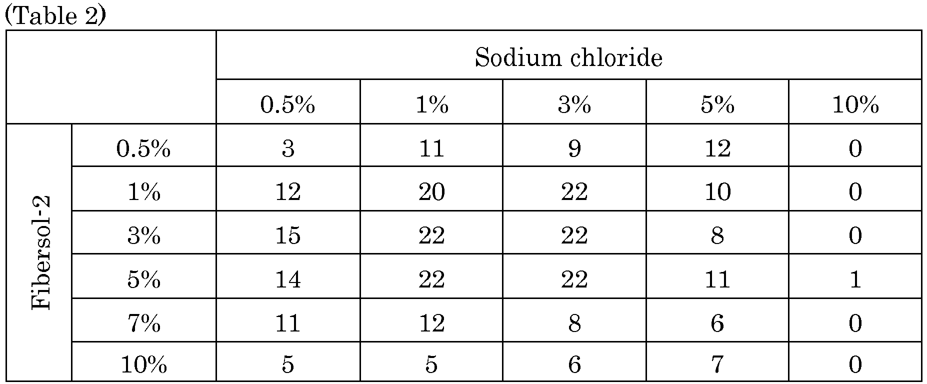

As is apparent from the results shown in Table 2, regarding the salty taste enhancement, it was found that the effect of enhancing a salty taste was remarkable in the cases where sodium chloride was contained at 0.5% or more, preferably approximately 1 to 5%, and more preferably approximately 1 to 3% in terms of anhydrous substance, whereas Fibersol-2 was contained at 0.5% or more, preferably approximately 1 to 7%, and more preferably approximately 1 to 5% in terms of anhydrous substance.

### <Experimental Example 3>

### <Influence of Water-Soluble Dietary Fibers on Salty Taste and Influence thereof on Foreign Taste Improvement in the Cases where Sodium Chloride and Potassium Chloride were used in Combination>

Next, investigation was made as to an effect of enhancing a salty taste of water-soluble dietary fibers and an effect of improving (masking) a foreign taste (harsh taste) thereof in the cases where potassium chloride, which can be said to be a typical salt substitute, coexisted with sodium chloride. Aqueous solutions were prepared in which 0.75% of sodium chloride coexisted with 0.75% of potassium chloride (reagent) in terms of anhydrous substance. In a similar manner to that in Experimental Example 1, a panel test was conducted to evaluate how the salty taste and the harsh taste were changed when the various water-soluble dietary fibers were contained at 1.0%, in comparison with a control (an aqueous solution containing 0.75% of sodium chloride and 0.75% of potassium chloride but containing no water-soluble dietary fiber). The panel test was conducted by 11 panelists including six men and five women at a room temperature of 26°C.

The influences on the salty taste and the harsh taste were evaluated by using five grades, which corresponded to the situations where the taste was markedly reduced, slightly reduced, unchanged, slightly enhanced, or markedly enhanced in comparison with the control. For each of the water-soluble dietary fibers and for each of the grade, the number of panelists who made the evaluation is shown in Table 3-1 or 3-2.

**(Table 3-1)**

| Product name | Influence on salty taste | | | | | Remarks |
|---|---|---|---|---|---|---|
| | Markedly reduced | Slightly reduced | Unchanged | Slightly enhanced | Markedly enhanced | |
| Fibersol-2 | 0 | 0 | 0 | 0 | 11 | |
| Pinedex #2 | 0 | 0 | 7 | 3 | 1 | |
| Nutriose FB | 0 | 1 | 3 | 6 | 1 | Foreign taste |
| Litesse II | 0 | 1 | 3 | 6 | 1 | Foreign taste |
| Raftiline HP | 0 | 0 | 2 | 7 | 2 | |
| Trehalose | 1 | 2 | 5 | 3 | 0 | Sweet taste |

As is apparent from the results shown in Table 3-1, a significant effect of enhancing a salty taste was not observed in the cases of the coexistence of Pinedex #2 or trehalose, as in the case with the results of Experimental Example 1. On the other hand, an effect of enhancing a salty taste was observed in each of the cases of Fibersol-2, Nutriose FB, Litesse II, and Raftiline HP even when potassium chloride was contained, although the magnitude of the effect varied thereamong. Among theses, Fibersol-2, which is an indigestible dextrin, was again exhibited a particularly remarkable effect of enhancing a salty taste. In other words, the water-soluble dietary fibers, especially the indigestible dextrin, exhibited a remarkable effect of enhancing a salty taste also in the presence of potassium chloride.

In addition, as described in Remarks, many panelists commented that they perceived a foreign taste such as an astringent taste or a harsh taste in the cases of Nutriose FB and Litesse II, and many panelists commented that they perceived a sweet taste in the case of trehalose.

**(Table 3-2)**

| Product name | Influence on harsh taste | | | | | Remarks |
|---|---|---|---|---|---|---|
| | Markedly reduced | Slightly reduced | Unchanged | Slightly enhanced | Markedly enhanced | |
| Fibersol-2 | 10 | 1 | 0 | 0 | 0 | |
| Pinedex #2 | 0 | 2 | 9 | 0 | 0 | |
| Nutriose FB | 0 | 5 | 4 | 2 | 0 | Foreign taste |
| Litesse II | 0 | 4 | 5 | 2 | 0 | Foreign taste |
| Raftiline HP | 0 | 4 | 5 | 2 | 0 | |
| trehalose | 0 | 1 | 7 | 1 | 1 | Sweet taste |

As is apparent from the results shown in Table 3-2, Fibersol-2 exhibited not only an effect of enhancing a salty taste but also a remarkable effect of reducing a harsh taste. In other words, an astonishing and meaningful result was obtained which indicated that the indigestible dextrin had not only an effect of enhancing a salty taste, but also an effect of improving (masking) a foreign taste (harsh taste), which can be problematic when a salty taste is intended to be improved by a method in which sodium chloride is reduced and the salty taste is supplemented by potassium chloride.

In addition, as described in Remarks, many panelists commented that they perceived a foreign taste such as an astringent taste or a harsh taste in the cases of Nutriose FB and Litesse II, and many panelists commented that they perceived a sweet taste in the case of trehalose.

### <Experimental Example 4>

### <Influence of Water-Soluble Dietary Fibers on Salty Taste in the Cases where Sodium Chloride and Monosodium Glutamate Were used in Combination>

Next, investigation was made as to an effect of enhancing a salty taste achieved by the water-soluble dietary fibers in the cases where monosodium glutamate, which is compatible with many foods and beverages, coexisted with sodium chloride. Aqueous solutions were prepared in which 1.5% of sodium chloride coexisted with 0.2% of monosodium glutamate in terms of anhydrous substance. Moreover, in a similar manner to that in Experimental Example 1, a panel test was conducted to evaluate how the salty taste was changed when the various water-soluble dietary fibers were contained at 1.0%, in comparison with a control (a solution containing 1.5% of sodium chloride and 0.2% of monosodium glutamate, but containing no water-soluble dietary fiber). The panel test was conducted by 11 panelists including six men and five women, at a room temperature of 26°C. The influence on the salty taste was evaluated by using four grades, which corresponded to the situations where the salty taste was reduced, unchanged, slightly enhanced, or markedly enhanced in comparison with the control. For each of the water-soluble dietary fibers and for each of the grade, the number of panelists who made the evaluation is shown in Table 4.

**(Table 4)**

| Product name | Influence on salty taste | | | | Remarks |
|---|---|---|---|---|---|
| | Reduced | Unchanged | Slightly enhanced | Markedly enhanced | |
| Fibersol-2 | 0 | 0 | 0 | 11 | |
| Pinedex #2 | 1 | 8 | 2 | 0 | |
| Nutriose FB | 0 | 3 | 8 | 0 | Foreign taste |
| Litesse II | 0 | 4 | 7 | 0 | Foreign taste |
| Raftiline HP | 0 | 2 | 7 | 2 | |
| Trehalose | 0 | 6 | 5 | 0 | Sweet taste |

As is apparent from the results shown in Table 4, a significant effect of enhancing a salty taste was not observed in the cases of the coexistence of Pinedex #2 or trehalose, as in the case with the results of Experimental Example 1. On the other hand, an effect of enhancing a salty taste was observed in each of the cases of Fibersol-2, Nutriose FB, Litesse II, and Raftiline HP even when monosodium glutamate was contained, although the magnitude of the effect varied thereamong.

The indigestible dextrin can be said to be a substantially tasteless and odorless substance, but has an extremely slight sweet taste, if we dare to describe it. The sweet taste as a whole appears and disappears relatively slowly in the mouth. This characteristic taste quality allows a salty taste and an umami taste to linger in the mouth for a relatively long period. In other words, the indigestible dextrin can enhance the salty taste and the umami taste. Moreover, the indigestible dextrin can mask the foreign taste (harsh taste) which is attributable to a salt substitute such as potassium chloride and which remains in the mouth. This is presumably because of the slow appearance and disappearance of the sweet taste.

Meanwhile, in the case of a dextrin having a less branched structure, the effect of enhancing a salty taste and the effect of reducing a foreign taste are different from those of the indigestible dextrin. This is presumably because the dextrin having a less branched structure has a slight sweet taste, but the quality of the taste as a whole is not rich. Moreover, trehalose lacks the effect of masking the foreign taste (harsh taste) of a salt substitute such as potassium chloride remaining in the mouth, presumably because of the following reason. Specifically, the sweet taste thereof is strong, and thus an emphasized salty taste is perceived for a moment. However, this is not persistent, and the quality of the sweet taste is sharp.

### [Example 1]

### Soup

Cream soups were prepared according to the following recipes and process, and a panel test was conducted to evaluate the salty taste thereof. The panel test was conducted by 11 panelists including six men and five women at a room temperature of 26°C, and a soup temperature of 40°C. The influence on the salty taste was evaluated by using four grades, which corresponded to the situations where the salty taste was reduced, unchanged, slightly enhanced, or markedly enhanced in comparison with Comparative Example 1, which was a control. For each of the grades, the number of panelists who made the evaluation is shown in Table 5.

### <Recipe>

| | Recipe | | |
|---|---|---|---|
| | Comparative Example 1 (control) | Comparative Example 2 | Example 1 |
| Milk | 65.0 | 65.0 | 65.0 |
| Salt-free butter | 7.0 | 7.0 | 7.0 |
| FARINEX LCF* | 2.5 | 2.5 | 2.5 |
| Consommé powder | 0.5 | 0.5 | 0.5 |
| Sodium chloride | 0.5 | - | - |
| Sodium glutamate | 0.3 | 0.3 | 0.3 |
| Water | 24.2 | 24.7 | 23.7 |
| Fibersol-2 | - | - | 1.0 |
| Total | 100.0 | 100.0 | 100.0 |

| | | | |
|---|---|---|---|
| *Matsutani Chemical Industry Co., Ltd., modified starch | | | |

### <Process>

The raw materials were mixed and heated up to 90°C with stirring, and then water was supplemented by an amount equal to the loss. Then, the minute was packed in a retort pouch, and sterilized at 120°C for 20 minutes.

**(Table 5)**

| | Influence on salty taste | | | |
|---|---|---|---|---|
| | Reduced | unchanged | Slightly enhanced | Markedly enhanced |
| Comparative Example 2 | 11 | 0 | 0 | 0 |
| Example 1 | 0 | 7 | 4 | 0 |

Comparative Example 2 to which no sodium chloride was added resulted in, as a matter of course, an unsatisfactory salty taste and an unsatisfactory umami taste when compared with the control, Comparative Example 1. However, for Example 1 which was the same as Comparative Example 2 except that Fibersol-2 was added, all the panelists stated that the salty taste perceived was equal or superior to that of the control, Comparative Example 1. It was understood that, in the system of the cream soup, sodium chloride in an amount of 0.5% can be substituted by 1.0% of Fibersol-2.

Note that, although no sodium chloride was added in Comparative Example 2 and Example 1, the cream soups retained a salty taste, because the consommé powder contained approximately 34% of salt content (in terms of common salt).

Moreover, when the salt content of each of Comparative Example 2 and Example 1 was measured by using a digital salt meter ES-421 manufactured by Atago Co., Ltd., the both were 0.5%, indicating that the salty taste determined by the measurement was kept at the same level therebetween.

### [Example 2]

### Bread

Hamburger buns were made according to the following recipes and process, and evaluated for physical properties and taste. Each numeric value in the recipe table is represented in Baker's percentage (% by mass, which is represented as the ratio of the mass of each component to the total mass of wheat flour, where the total mass of wheat flour is taken as 100%).

### <Recipe>

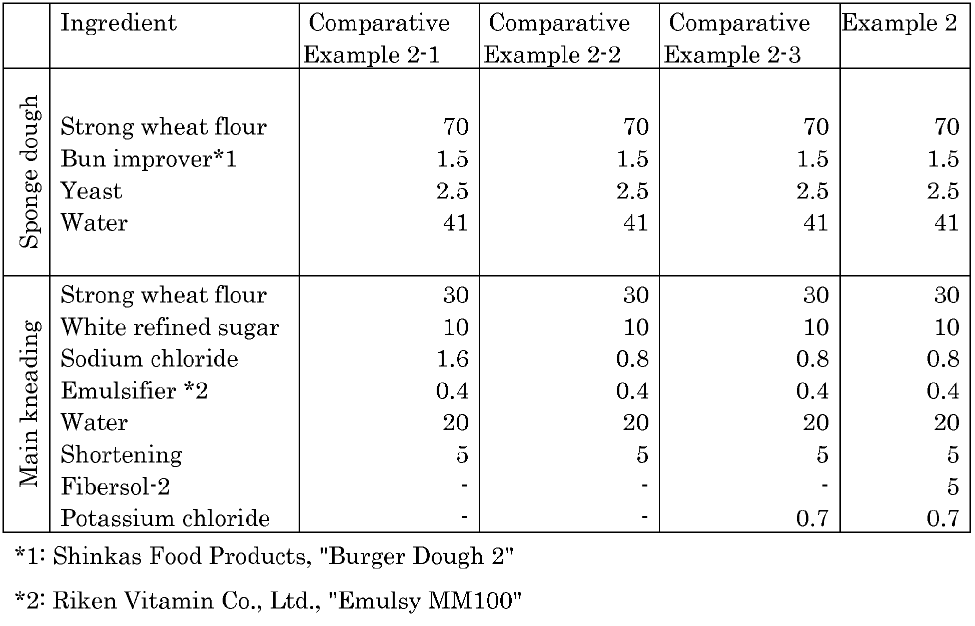

### <Process>

| | | |
|---|---|---|
| Sponge dough | mixing | L3H1 |
| | kneading temperature | 24°C |
| | fermentation time | 3.5 hours |
| Main kneading | mixing | L3H2↓L3H1 |
| | kneading temperature | 25°C |
| | floor time | 20 minutes |
| | divided weight | 60 g |
| | bench time | 20 minutes |
| | final proof | 55 minutes (38°C, 80%RH) |
| | bake | upper oven temperature 200°C, lower oven temperature 195°C, 9 minutes |

### <Sensory Evaluation>

Dough physical properties, taste, and moistness were rated by five panelists trained daily according to the following five-grade evaluations. The evaluation results are shown in Table 6.

### Dough physical property evaluation

5: at the same level of Comparative Example 2-1.
4: the dough was slightly runny during the dividing or molding thereof in comparison with Comparative Example 2-1.
3: the dough was slightly runny and sticky during the dividing or molding thereof in comparison with Comparative Example 2-1.
2: the dough was runny and sticky during the dividing or molding thereof in comparison with Comparative Example 2-1, so that the dough required a longer mixing time.
1: unsuitable for actual production, because the mixing time was extremely extended.

### Taste evaluation

5: at the same level of Comparative Example 2-1.
4: slightly inferior in flavor to Comparative Example 2-1.
3: apparently inferior in flavor to Comparative Example 2-1.
2: a foreign taste such as a bitter taste or a harsh taste was perceived.
1: a foreign taste such as a bitter taste or a harsh taste was strongly perceived.

### Moistness evaluation

5: very moist, easy to eat.
4: moistness was perceived.
3: poorly moist, no dryness was perceived, not difficult to eat.
2: slightly dry, difficult to eat.
1: very dry, difficult to swallow.

**Table 6**

| | Comparative Example 2-1 | Comparative Example 2-2 | Comparative Example 2-3 | Example 2 | Remarks |
|---|---|---|---|---|---|
| Dough physical properties | 5 | 4 | 5 | 5 | In Comparative Example 2-2, the dough was slightly runny. |
| Taste | 5 | 3 | 2 | 4 | In Comparative Example 2-2, the lack of salty taste was prominent. |
| | | | | | In Comparative Example 2-3, a harsh taste was perceived. |
| Moistness | 4 | 4 | 3 | 5 | |
| Total | 19 | 15 | 15 | 18 | |

When sodium chloride was reduced by 50%, the salty taste was lost, and the taste was bad (Comparative Example 2-2). Here, when the salty taste was supplemented by potassium chloride, a harsh taste appeared, and the moistness was lost (Comparative Example 2-3). However, by adding Fibersol-2, which is a water-soluble dietary fiber, the salty taste was enhanced, the harsh taste was masked, and the moistness was also obtained.

### [Example 3]

### Soup 2

Cream soups were prepared according to the following recipes and process. A panel test was conducted to evaluate the harsh taste thereof. A cream soup was prepared by using a consommé powder containing no sodium glutamate (Comparative Example 3-1, control). Another cream soup was prepared by substituting a part of sodium chloride therein by potassium chloride (Comparative Example 3-2). Still another cream soup was prepared by adding thereto a water-soluble dietary fiber (Fibersol-2) (Example 3). Those cream soups were evaluated by comparison. The panel test was conducted by 11 panelists (including six men and five women) at a room temperature of 26°C, and a soup temperature of 40°C. The harsh taste was evaluated by using five grades, which corresponded to the situations where the harsh taste was effectively reduced, slightly reduced, unchanged, slightly enhanced, or markedly enhanced in comparison with Comparative Example 3-1, which was control. For each grade, the number of panelists who made the evaluation is shown in Table 7.

### <Recipe>

| | Recipe | | |
|---|---|---|---|
| | Comparative Example 3-1 (control) | Comparative Example 3-2 | Example 3 |
| Milk | 65.0 | 65.0 | 65.0 |
| Salt-free butter | 7.0 | 7.0 | 7.0 |
| Pine Ace #5*1 | 2.0 | 2.0 | 2.0 |
| Consomme powder*2 | 0.5 | 0.5 | 0.5 |
| Sodium chloride | 0.5 | 0.3 | 0.3 |
| Potassium chloride | - | 0.2 | 0.2 |
| Water | 25.0 | 25.0 | 22.0 |
| Fibersol-2 | - | - | 3.0 |
| Total | 100.0 | 100.0 | 100.0 |

| | | | |
|---|---|---|---|
| *1: manufactured by Matsutani Chemical Industry Co., Ltd., modified starch *2: manufactured by Nestle Japan Ltd., Maggi, consommé containing no chemical seasoning | | | |

### <Process>

The raw materials were mixed and heated up to 90°C with stirring, and then water was supplemented by an amount equal to the loss. Then, the mixture was packed in a retort pouch and sterilized at 120°C for 20 minutes.

**(Table 7)**

| | Harsh taste | | | | |
|---|---|---|---|---|---|
| | Effectively reduced | Slightly reduced | Unchanged | Slightly enhanced | Markedly enhanced |
| Comparative Example 3-2 | 0 | 0 | 0 | 5 | 6 |
| Example 3 | 0 | 0 | 11 | 0 | 0 |

Evaluation was conducted on the harsh taste of Comparative Example 3-2 where a part (0.2% in amount) of sodium chloride in the recipe of Comparative Example 3-1 (control) was substituted by potassium chloride (0.2% in amount). As a result, the harsh taste was, of course, enhanced in Comparative Example 3-2 in comparison with the Comparative Example 3-1, which was a control. On the other hand, when evaluation was conducted on the harsh taste of the case (Example 3) where Fibersol-2 (3.0% in amount) was add, all the panelists stated that the Example 3 was at the same level as the Comparative Example 3-1 where no potassium chloride was contained (i.e., Example 3 was free from the harsh taste).

In addition, although the salty taste is not shown in the table, all the panelists stated that the salty taste in Example 3 was unchanged or slightly enhanced in comparison with the Comparative Example 3-1, which was the control.

As described above, it has been found that the water-soluble dietary fiber, Fibersol-2, is not only capable of effectively supplementing a salty taste which is unintentionally reduced when a part of sodium chloride in a food or beverage is substituted by potassium chloride, but also capable of effectively masking the harsh taste originated from potassium chloride.

In addition, examination was made as to how much Fibersol-2 had to be added to the above-described cream soup in order to effectively mask the harsh taste characteristic to potassium chloride. As a result, it was indicated that addition at 1% resulted in a slightly weak effect, and addition at about 3% was most effective as in the case with the above-described recipe.

### [Example 4]

### Processed cheese

Processed cheeses were prepared according to the following recipe and process. In production of a processed cheese, sodium polyphosphate or trisodium citrate, which is to be represented on the label as an emulsifier, is generally used to improve the moldability. Here, to reduce the amount of sodium originated from those emulsifiers, a potassium salt such as tripotassium citrate is sometimes used instead. In this Example, cheeses were prepared as follows. A processed cheese using trisodium citrate was employed as a control (Comparative Example 4-1); all trisodium citrate in the recipe thereof was replaced with tripotassium phosphate (Comparative Example 4-2); and Fibersol-2 was further added thereto (Example 4). The salty taste and the harsh taste of these cheeses were evaluated by a panel test, which was conducted by 11 panelists (six men and five women). The salty taste and the harsh taste were evaluated by using five grades, which corresponded to the situations where the salty taste or the harsh taste was markedly reduced, slightly reduced, unchanged, slightly enhanced, or markedly enhanced in comparison with the Comparative Example 4-1, which was control. For each of the grades, the number of panelists who made the evaluation is shown in Table 8 for the salty taste, or in Table 9 for the harsh taste.

### <Recipe>

| | Recipe | | |
|---|---|---|---|
| | Comparative Example 4-1 (control) | Comparative Example 4-2 | Example 4 |
| Gouda cheese*1 | 100.0 | 100.0 | 100.0 |
| Citric acid 3Na | 1.7 | - | - |
| Phosphoric acid 3K | - | 3.0 | 3.0 |
| Fibersol-2 | - | - | 3.0 |
| Water | 18.3 | 17.0 | 14.0 |
| Total | 120.0 | 120.0 | 120.0 |
| | | | |
| Na amount (mg/cheese 100 g) | 829 | 504 | 504 |

| | | | |
|---|---|---|---|
| *1: Snow Brand Milk Products Co., Ltd., HOKKAIDO 100 HOUJYUN Gouda cheese (crushed) | | | |

### <Process>

At the ratio shown in the above-described recipe table, raw materials other than Gouda cheese were mixed. Thereafter, crushed Gouda cheese was added thereto, and the mixture was stirred and mixed with each other at 90°C for 5 minutes. After the stirring, the mixture was divided into pieces of approximately 7 g each. Then, each of the pieces was molded into a candy-like shape to prepare the cheese.

**(Table 8)**

| | Salty taste | | | | |
|---|---|---|---|---|---|
| | Markedly reduced | Slightly reduced | Unchanged | Slightly enhanced | Markedly enhanced |
| Comparative Example 4-2 | 5 | 6 | 0 | 0 | 0 |
| Example 4 | 0 | 1 | 7 | 3 | 0 |

The salty taste in Comparative Example 4-2 was apparently reduced in comparison with Comparative Example 4-1 (control). Almost all of the panelists stated that the salty taste was restored or enhanced in Example 4, where Fibersol-2 (3.0% in amount) was add to Comparative Example 4-2, to the same level as that of Comparative Example 4-1 (control).

**(Table 9)**

| | Harsh taste | | | | |
|---|---|---|---|---|---|
| | Markedly reduced | Slightly reduced | Unchanged | Slightly enhanced | Markedly enhanced |
| Comparative Example 4-2 | 0 | 0 | 0 | 4 | 7 |
| Example 4 | 0 | 0 | 8 | 3 | 0 |

The harsh taste was apparently enhanced in Comparative Example 4-2 in comparison with Comparative Example 4-1 (control). However, almost all the panelists stated that Example 4 where Fibersol-2 (3.0% in amount) was added to Comparative Example 4-2 was at the same level as Comparative Example 4-1 (control), (i.e., no harsh taste was perceived).

### [Example 5]

### Reduced-sodium soy sauce

A reduced-sodium soy sauce having an enhanced a salty taste was prepared as follows. An indigestible dextrin (Matsutani Chemical Industry Co., Ltd., Fibersol-2) was dissolved at 5% in a commercially available reduced-sodium soy sauce (Kikkoman corporation, trade name: "Tokusen Marudaizu Genen Shoyu (premium quality reduced-sodium whole soybean soy sauce)", common salt: approximately 8%). This product was apparently enhanced in salty taste and umami taste, when compared with the reduced-sodium soy sauce containing no Fibersol-2. Despite being reduced in sodium, this product can be advantageously used as a seasoning for boiled foods, everyday dishes, grilled foods, and soups as in the cases with ordinary products, and allows the flavors of the foods to be enjoyed. In addition, this product can be used advantageously for promoting the treatment of cardiovascular disease patients, preventing or improving lifestyle diseases or metabolic syndrome, maintaining and enhancing beauty and health, and the like.

### [Example 6]

### Reduced-sodium soybean paste

A reduced-sodium soybean paste having an enhanced salty taste was prepared as follows. Fibersol-2 was dissolved at 5% in a commercially available reduced-sodium soybean paste (Marukome Co., Ltd., trade name: "Oishiku Enbun 1/2", common salt: approximately 6.5%) by being kneaded therewith. This product had an apparently enhanced salty taste and an apparently enhanced umami taste, when compared with the reduced-sodium soybean paste. In addition, this product was reduced in the foreign taste due to potassium chloride added as a salt substitute to the commercially available reduced-sodium soybean paste. Hence, despite being reduced in sodium, this product can be advantageously used as a seasoning for boiled foods, everyday dishes, grilled foods, and soups as in the cases with ordinary products, and allows the flavors of the foods to be enjoyed. In addition, this product can be used advantageously for promoting the treatment of cardiovascular disease patients, preventing or improving lifestyle diseases or metabolic syndrome, maintaining or enhancing beauty and health, and the like.

### [Example 7]

### Reduced-sodium sauce for noodles

A reduced-sodium sauce for noodles was produced as follows. Specifically, 7 parts by mass of a reduced-sodium soy sauce, 2 parts by mass of Fibersol-2, and 10 parts by mass of Mirin were blended with 40 parts by mass of a broth prepared by using Kombu and dried bonito in a usual manner, and dissolved therein. In addition, a reduced-sodium sauce for noodles was produced as a control in the same manner as above except that no Fibersol-2 was used.

The reduced-sodium sauce for noodles of the control had a dull taste. On the other hand, the reduced-sodium sauce for noodles according to the present invention contained sodium chloride and the indigestible dextrin Fibersol-2, and thus was enhanced in saltiness and umami taste. Hence, despite being reduced in sodium, the reduced-sodium sauce according to the present invention allows the flavor of noodles to be enjoyed as in the cases of ordinary sauces for noodles.

### [Example 8]

### Salty taste enhancer

A salty taste enhancer for table use was obtained by packing a salty taste enhancer made of 80 parts by mass of Fibersol-2, 10 parts by mass of potassium chloride, 7 parts by mass of calcium chloride, and 3 parts by mass of magnesium sulfate into a container having shaker holes and a capacity of 300 ml. When the product is sprinkled on various foods and beverages which are unsatisfactory because of a weak salty taste and a dull food, the product is capable of enhancing the salty taste and also the umami taste thereof, imparting satisfactory tastes to the foods and beverages.

## Claims

1. A method for enhancing a salty taste of a food or beverage, comprising adding a water-soluble dietary fiber to the food or beverage wherein the water-soluble dietary fiber is selected from the group consisting of indigestible dextrins.

2. The method for enhancing a salty taste according to claim 1, wherein the method for enhancing a salty taste is a method for enhancing a salty taste of a sodium salt.

3. The method for enhancing a salty taste according to claim 2, wherein the sodium salt is sodium chloride.

4. The method for enhancing a salty taste according to claim 1, wherein the method for enhancing a salty taste is a method for improving (masking) a harsh taste of a potassium salt.

5. The method for enhancing a salty taste according to claim 4, wherein the potassium salt is potassium chloride.

6. The method for enhancing a salty taste according to any one of claims 1 to 5, wherein the amount of sodium chloride in the food or beverage is 0.5 w/w% or more in terms of anhydrous substance with respect to the food or beverage.

7. The method for enhancing a salty taste according to any one of claims 1 to 6, wherein the substitution ratio of potassium chloride for sodium chloride in the food or beverage is 50 w/w% or less in terms of anhydrous substance.

8. The method for enhancing a salty taste according to any one of claims 1 to 7, wherein the water-soluble dietary fiber is added in an amount of 1.0 w/w% or more in terms of anhydrous substance with respect to the food or beverage.

9. Use of an agent comprising a water-soluble dietary fiber for enhancing a salty taste of a food or beverage, wherein the water-soluble dietary fiber is selected from the group consisting of indigestible dextrins.

10. Use according to claim 9, said agent comprising:
- a water-soluble dietary fiber, wherein the water-soluble dietary fiber is selected from the group consisting of indigestible dextrins
and
- one or more selected from sodium chloride, salt substitutes, other salty taste enhancers, mineral supplements, flavor enhancers, and spices.

## Patentansprüche

1. Ein Verfahren zur Verbesserung eines salzigen Geschmacks eines Nahrungsmittels oder Getränks, umfassend das Zugeben eines wasserlöslichen Ballaststoffes zu dem Nahrungsmittel oder Getränk,
wobei der wasserlösliche Ballaststoff aus der Gruppe ausgewählt ist, die aus unverdaulichen Dextrinen besteht.

2. Das Verfahren zur Verbesserung eines salzigen Geschmacks nach Anspruch 1, wobei das Verfahren zur Verbesserung eines salzigen Geschmacks ein Verfahren zur Verbesserung des salzigen Geschmacks eines Natriumsalzes ist.

3. Das Verfahren zur Verbesserung eines salzigen Geschmacks nach Anspruch 2, wobei das Natriumsalz Natriumchlorid ist.

4. Das Verfahren zur Verbesserung eines salzigen Geschmacks nach Anspruch 1, wobei das Verfahren zur Verbesserung eines salzigen Geschmacks ein Verfahren zur Aufbesserung (Maskieren) eines scharfen Geschmacks eines Kaliumsalzes ist.

5. Das Verfahren zur Verbesserung eines salzigen Geschmacks nach Anspruch 4, wobei das Kaliumsalz Kaliumchlorid ist.

6. Das Verfahren zur Verbesserung eines salzigen Geschmacks nach einem der Ansprüche 1 bis 5, wobei die Menge an Natriumchlorid in dem Nahrungsmittel oder Getränk 0,5 Gew.-% oder mehr im Sinne von wasserfreier Substanz in Bezug auf das Nahrungsmittel oder Getränk beträgt.

7. Das Verfahren zur Verbesserung eines salzigen Geschmacks nach einem der Ansprüche 1 bis 6, wobei das Substitutionsverhältnis von Kaliumchlorid durch Natriumchlorid in dem Nahrungsmittel oder Getränk 50 Gew.-% oder weniger im Sinne von wasserfreier Substanz beträgt.

8. Das Verfahren zur Verbesserung eines salzigen Geschmacks nach einem der Ansprüche 1 bis 7, wobei der wasserlösliche Ballaststoff in einer Menge von 1,0 Gew.-% oder mehr im Sinne von wasserfreier Substanz in Bezug auf das Nahrungsmittel oder Getränk zugegeben wird.

9. Verwendung eines Mittels, umfassend einen wasserlöslichen Ballaststoff zur Verbesserung eines salzigen Geschmacks eines Nahrungsmittels oder Getränks, wobei der wasserlösliche Ballaststoff aus der Gruppe ausgewählt ist, die aus unverdaulichen Dextrinen besteht.

10. Verwendung nach Anspruch 9, wobei das Mittel umfasst:
- einen wasserlöslichen Ballaststoff, wobei der wasserlösliche Ballaststoff aus der Gruppe ausgewählt ist, die aus unverdaulichen Dextrinen besteht
und
- eines oder mehrere ausgewählt aus Natriumchlorid, Salzersatzstoffe, andere Verbesserer salzigen Geschmacks, Mineralergänzungsstoffe, Geschmacksverstärker und Gewürze.

## Revendications

1. Procédé pour rehausser un goût salé d'un aliment ou d'une boisson, comprenant l'ajout d'une fibre alimentaire soluble dans l'eau à l'aliment ou à la boisson
dans lequel la fibre alimentaire soluble dans l'eau est choisie dans le groupe constitué des dextrines non digestibles.

2. Procédé pour rehausser un goût salé selon la revendication 1, dans lequel le procédé pour rehausser un goût salé est un procédé pour rehausser un goût salé d'un sel de sodium.

3. Procédé pour rehausser un goût salé selon la revendication 2, dans lequel le sel de sodium est le chlorure de sodium.

4. Procédé pour rehausser un goût salé selon la revendication 1, dans lequel le procédé pour rehausser un goût salé est un procédé pour améliorer (masquer) un goût âpre d'un sel de potassium.

5. Procédé pour rehausser un goût salé selon la revendication 4, dans lequel le sel de potassium est le chlorure de potassium.

6. Procédé pour rehausser un goût salé selon l'une quelconque des revendications 1 à 5, dans lequel la quantité de chlorure de sodium dans l'aliment ou la boisson est de 0,5 % p/p ou plus en termes de substance anhydre par rapport à l'aliment ou à la boisson.

7. Procédé pour rehausser un goût salé selon l'une quelconque des revendications 1 à 6, dans lequel le rapport de substitution du chlorure de potassium par le chlorure de sodium dans l'aliment ou la boisson est de 50 % p/p ou moins en termes de substance anhydre.

8. Procédé pour rehausser un goût salé selon l'une quelconque des revendications 1 à 7, dans lequel la fibre alimentaire soluble dans l'eau est ajoutée dans une quantité de 1,0 % % p/p ou plus en termes de substance anhydre par rapport à l'aliment ou à la boisson.

9. Utilisation d'un agent comprenant une fibre alimentaire soluble dans l'eau pour rehausser un goût salé d'un aliment ou d'une boisson, dans laquelle la fibre alimentaire soluble dans l'eau est choisie dans le groupe constitué des dextrines non digestibles.

10. Utilisation selon la revendication 9, ledit agent comprenant:
- une fibre alimentaire soluble dans l'eau, dans laquelle la fibre alimentaire soluble dans l'eau est choisie dans le groupe constitué des dextrines non digestibles
et
- un ou plusieurs éléments choisis parmi le chlorure de sodium, des succédanés du sel, d'autres rehausseurs de goût salé, des compléments minéraux, des rehausseurs de saveur, et des épices.
